# EUROPÄISCHE PATENTANMELDUNG

(11) **EP 0 750 402 A2**
(43) Veröffentlichungstag der Anmeldung: **27.12.1996**
(21) Anmeldenummer: 96109899.3
(22) Anmeldetag: 19.06.1996
(51) Int. Cl.: H04B 1/10

(54) **Verfahren und Vorrichtung zur Erkennung und zum Ausfiltern eines eine sinusförmige Störung enthaltenden Signals**

(30) Priorität: 23.06.1995 IT MI951352
(71) Anmelder: ABB Research Ltd., CH-8050 Zürich (CH)
(72) Erfinder: Lorito, Fabrizio, 20131 Milano (IT); Turati, Walter, 20099 Sesto S. Giovanni (IT)
(74) Vertreter: Mayer, Hans Benno, Dipl.-Ing.

(57) **Zusammenfassung**

Verfahren und Vorrichtung zur Erkennung und zum Ausfiltern eines periodischen Signals (RS), das einen mit Rechteckwellen modulierten Sinusträger (f1) enthält, dessen Frequenz die Information darstellt, der ein sinusförmiges Störsignal überlagert ist.
Es ist ein aus zwei Bandpassfiltergruppen (G1, G2) bestehender Satz vorgesehen, der Umschaltmittel (SW1, SW2, SW3, SW4, SW5) aufweist, um das periodische Signal (RS) in Abhängigkeit von der Frequenz (fm) des Störsignals und von der An- bzw. der Abwesenheit einer Umkehrung im modulierenden Signal durch die Filter zu leiten, sowie Vergleichsmittel (VL) besitzt, um zu ermitteln, an welchem Filterausgang die grösste Sinusamplitude anliegt. Die Erfindung findet bevorzugte Anwendung auf dem Gebiet der Eisenbahn-Signalübertragungsanlagen.

## Beschreibung

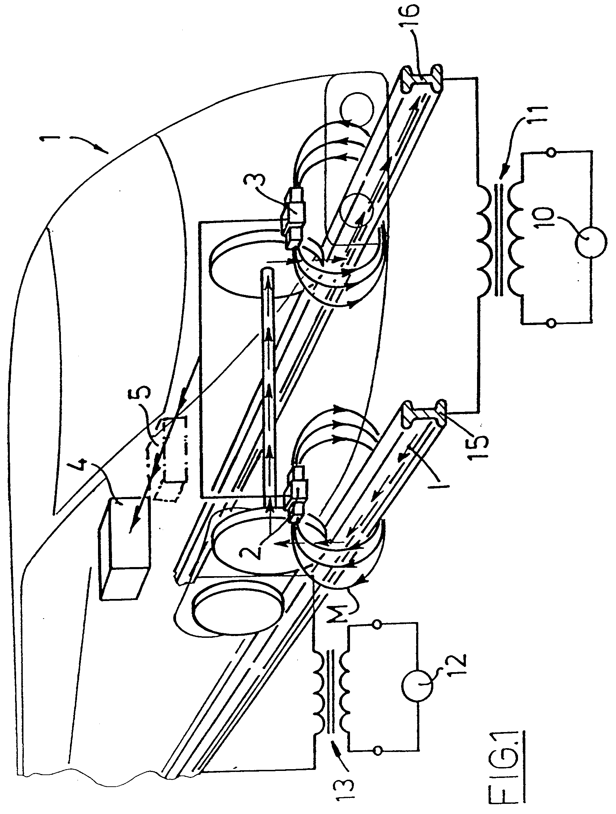

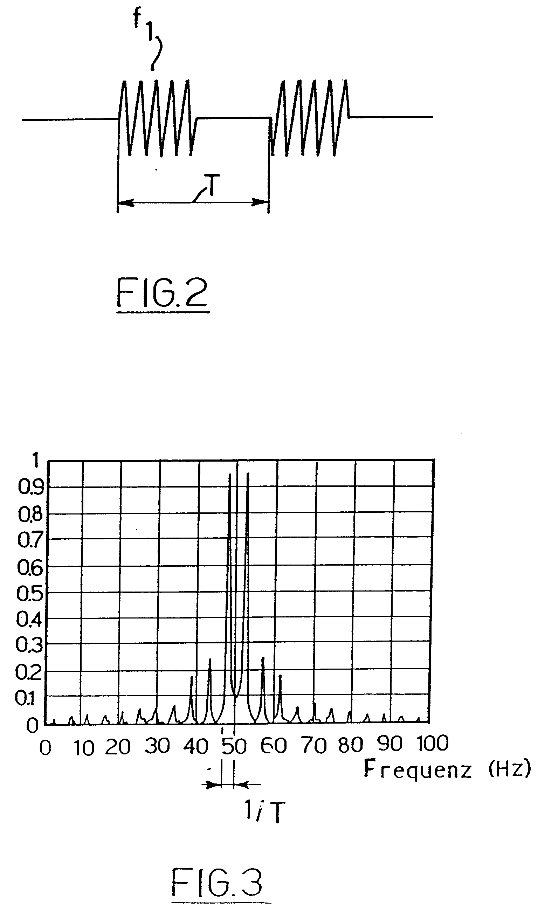

Die Erfindung betrifft ein Verfahren und eine Vorrichtung zur Erkennung eines Informationscodes in einem von einer sinusförmige Störung befallenen Signals, wobei das Störsignal durch Ausfiltern unterdrückt wird.
Die Erfindung findet besonders bevorzugte, jedoch nicht ausschliessliche Anwendung auf dem Gebiet der Eisenbahn-Signalanlagen und wird nachstehend mit Bezug auf dieses Anwendungsgebiet beschrieben.
Das erfindungsgemässe Verfahren kann jedoch allgemein auf vielen anderen Gebieten verwendet werden, wo es erforderlich ist, die Grundfrequenz eines periodischen Signals zu erkennen, welches eine sinusförmige Störung der gleichen Grössenordnung des Nutzsignals enthält.
Durch eine Eisenbahn-Signalanlage wird dem Zugführer der Zustand der Lichtsignale des zu befahrenden Gleisabschnittes angezeigt. Dazu wird ein elektrisches Signal verwendet, das "Signalwiederholung" oder Signal RS genannt wird und die Zustände der Lichtsignale und eventuell weitere Dienstinformationen in kodierter Form enthält.
Wie in Figur 1 schematisch dargestellt ist, werden bei einem bekannten Verfahren zur Übertragung des Signals RS voneinander getrennte Gleisabschnitte benutzt, zum Beispiel 1200 Meter lange Abschnitte, deren zwei Schienen 15 und 16 eine Übertragungslinie bilden, entlang welcher sich ein entsprechendes Signal RS ausbreitet. Mit dem einen Ende des Gleisabschnittes ist über eine schematisch durch den Transformator 11 dargestellte induktive Kopplung ein Übertragungsgerät 10 verbunden und mit dem entgegengesetzten Ende ist ein Empfangsgerät 12 verbunden, das ebenfalls über eine schematisch durch den Transformator 13 dargestellte induktive Kopplung an der Linie angeschlossen ist.
In jeder Schiene erzeugt der Strom I des Signals RS ein Magnetfeld M, das von den beiden Magnetfeldsensoren 2 und 3 aufgenommen wird, die in einen, das Gleis befahrenden Zug 1 eingebaut sind. Die beiden Sensoren, die typisch aus zwei Spulen bestehen, arbeiten im wesentlichen als Aufnehmer oder "Antennen". Die an den Enden der Spulen 2 und 3 anliegenden elektrischen Signale werden einer Dekodiervorrichtung 4 zugeleitet, die in der Lage ist, den im Signal RS enthaltenen Code auszuwerten und dem Führer in Form einer Information über die Befahrbarkeit der anschliessenden Gleisabschnitte mitzuteilen. Wenn der Abschnitt frei ist, d.h. wenn sich auf demselben kein Zug befindet, wird das Signal RS dagegen dem Empfangsgerät 12 am anderen Ende des getrennten Gleisabschnittes zugeleitet. In der Zeichnung ist ausserdem eine erfindungsgemässe Vorrichtung 5 mit Strichlinien dargestellt, die zwischen den Sensoren und der Dekodiervorrichtung 4 angeordnet ist und weiter vorn näher geschilderet wird.
Der Aufbau des Signals RS wird mit Bezug auf die Figuren 2 und 3 beschrieben. Das Signal besteht aus der Summe von zwei Sinusträgern, die Frequenzen von 50 bzw. 178 Hz haben und jeweils mit Rechteckwellen moduliert werden, wobei die Frequenz dieser Rechteckwellen die zu übertragende Information darstellt.
Figur 2 stellt einen Sinusträger mit durch eine Rechteckwelle mit einer Periode T modulierter Frequenz f1 dar (d.h. einer durch 1/T gegebenen Frequenz) und zeigt dabei, dass die Frequenz f1 anwesend ist, wenn die modulierende Rechteckwelle einen ihrer zwei möglichen Werte (zum Beispiel den Plus-Wert) aufweist, und dagegen ganz abwesend ist, wenn die modulierende Rechteckwelle den anderen Wert (zum Beispiel den Minus-Wert oder Null) aufweist. Die modulierenden Frequenzen können einen der vier Werte von 75, 120, 180 und 170 Impulsen in der Minute (und zwar 1,25 Hz, 2 Hz, 3 Hz und 4,4 Hz) für beide Träger zu 50 und 178 Hz aufweisen. Unter den möglichen Kombinationen werden 9 Kombinationen gewählt, die ebensovielen möglichen Zuständen der Lichtsignale entsprechen.
Figur 3 zeigt das Frequenzspektrum des Signals RS für den 50-Hz-Träger als Ergebnis einer Modulation bei der Frequenz 1/T, das zwei Teile oder Linien mit einer Frequenz von 50 Hz ± 1/T und Oberwellen umfasst.
Wie bereits angegeben, ist die vom Signal RS geführte Information durch die Frequenz des modulierenden Rechteckwellensignals dargestellt und zwischen der Frequenz der Modulation und der Lage der Hauptlinie des Spektrums besteht ein eineindeutiges Verhältnis.
Die insbesondere für Hochgeschwindigkeitszüge benutzten Wechselstrommotoren weisen ein gestreutes und entsprechend der Drehfrequenz des Motors veränderliches Magnetfeld auf.
Der Magnetfluss dieses Feldes verkettet sich mit den Aufnehmerspulen und, da er gegenüber demjenigen des Signals RS ziemlich stark ist, erzeugt er ein kräftiges, sich dem Signal RS überlagerndes sinusförmiges Störsignal. Im Spektrum ist daher das vom Motor erzeugte Störsignal durch eine auf der Motorfrequenz liegende Linie dargestellt und ändert sich mit dieser Frequenz, wobei es seinen Einfluss in einem Frequenzbereich zwischen 32,5 Hz und 65 Hz ausübt.
Da die durch den Motor erzeugte Störung ihren Einfluss in einem Frequenzbereich zeigt, der ausschliesslich den auf 50 Hz modulierten Teil betrifft, wird nachstehend zur einfacheren Darlegung, nur dieser Teil in Betracht gezogen.
Zur Codeerkennung benutzen die bekannten Dekodiervorrichtungen RIF Bandpassfilter, die aufgrund der Hüllkurve des empfangenen Signals arbeiten. Wenn daher die Frequenz der sinusförmigen Störung einen Wert annimmt, derartig ausgebildet ist, um durch die Bandpassfilter ausgeschieden zu werden, wird die Störing vom Filter durchgelassen und fügt sich dem Nutzsignal hinzu, wobei dieses verformt wird und seine Hüllkurve unerkennbar macht.
Das Ergebnis ist, dass der Fahrzeugführer kein erkennbares Signal erhält und dadurch Verkehrsprobleme entstehen, oder sogar ein fehlerhaftes Signal erhält, was noch schlimmere Folgen haben kann.
Der Erfindung liegt die Aufgabe zugrunde, die geschilderten Nachteile des bekannten Standes der Technik zu vermeiden und insbesondere ein Verfahren vorzuschlagen, mit dem
sich der im Signal RS enthaltene Code auch in Anwesenheit einer Störung um die 50 Hz, d.h. die Frequenz eines der Träger, erkennen lässt, und diese Störung durch Ausfiltern zu beseitigen.
Weiterhin liegt der Erfindung die Aufgabe zugrunde, eine Vorrichtung zu schaffen, mit der sich die Störung ausfiltern und der Code eines Signals RS erkennen lässt.
Diese Aufgaben werden durch die Erfindung gemäss den Merkmalen des in den Ansprüchen 1 und 2 angegebenen Verfahrens gelöst.
Die Erfindung betrifft ausserdem eine Vorrichtung, die die in Anspruch 3 angegebenen Merkmale aufweist.
Weitere vorteilhafte Merkmale sind Gegenstand der abhängigen Ansprüche.
Die Erfindung wird nun an Hand der beiliegenden Zeichnungen beschrieben, die eine bevorzugte, aber nicht beschränkende Ausführungsform der Erfindung darstellen. Es zeigen:
Figur 1 eine schematische Darstellung des bekannten, einem Zug zugeleiteten Signals RS;
Figur 2 eine schematische Darstellung des Aufbaues des Signals RS;
Figur 3 das Frequenzspektrum des Signals RS für einen 50-Hz-Träger;

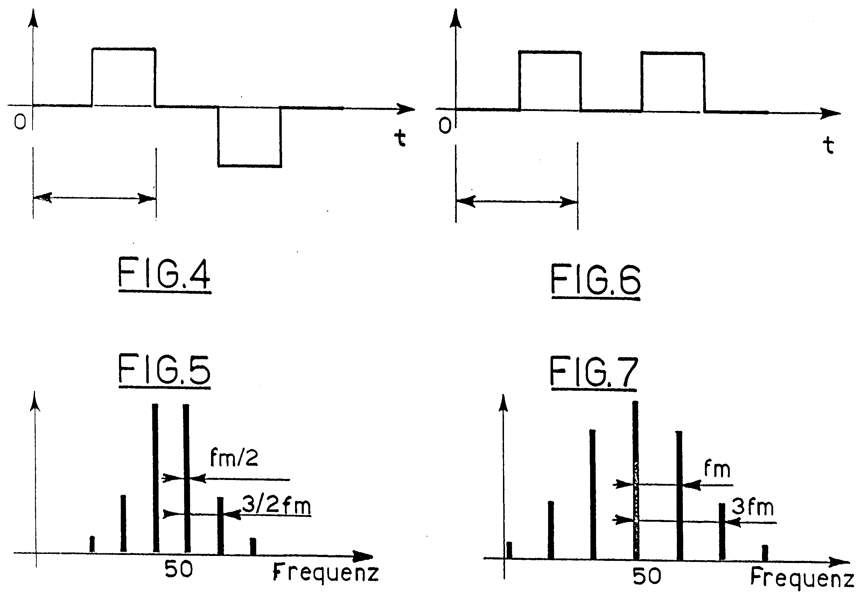

Figur 4 eine schematische Darstellung eines modulierenden Signals mit Fasenumkehrung,
Figur 5 ein mit dem modulierenden Signal laut Figur 4 erhaltenes Frequenzspektrum;
Figur 6 eine schematische Darstellung eines modulierenden Signals ohne Fasenumkehrung;
Figur 7 ein mit dem modulierenden Signal gemäss Figur 6 erhaltenes Frequenzspektrum;
Figur 8 das Vorfiltern eines von einer Störung befallenen Signals,
Figur 9 die Erkennung der Umkehrung im modulierenden Signal;
Figur 10 ein Schaltbild der erfindungsgemässen Vorrichtung; und
Figur 11 eine bevorzugte Ausführungsform der durch einen programmierten Mikroprozessor gestützen Vorrichtung.
Das erfindungsgemässe Verfahren wird erst nach Schilderung einiger Aspekte des Signals RS eingehend beschrieben, die das Verfahren selbst besser verständlich machen.
Das modulierende Rechteckwellensignal kann eine "ungerade Welle" sein, d.h. ein Signal mit Fasenumkehrung gemäss Figur 4 oder ein Signal ohne Fasenumkehrung gemäss Figur 6.
Im ersten Fall ist das in Figur 5 dargestellte Frequenzspektrum des modulierten Signals symmetrisch zur Trägerfrequenz von 50 Hz. Im zweiten Fall hat das in Figur 7 dargestellte Frequenzspektrum des modulierten Signals einen Teil der Trägerfrequenz von 50 Hz.
Da in einigen Gleisabschnitten das Signal RS mit Fasenumkehrung und in anderen Gleisabschnitten ohne Fasenumkehrung übermittel wird, sieht die Erfindung die Ermittlung der An- bzw. der Abwesenheit der Umkehrung vor.
Die Übereinstimmung zwischen dem zugeleiteten Code und der Frequenz der Grundlinie ist in nachstehender Tabelle 1 angegeben.

**Tabelle 1**

| Codeart (Schwingungen/min) | Umkehrung vorhanden | Frequenz der ersten Oberwelle |
|---|---|---|
| 75 | NEIN | 50±1,25 |
| 120 | NEIN | 50±2 |
| 180 | NEIN | 50±3 |
| 270 | NEIN | 5±4,5 |
| 75 | JA | 50±0,625 |
| 120 | JA | 50±1 |
| 180 | JA | 50±1,5 |
| 270 | JA | 50±2,25 |

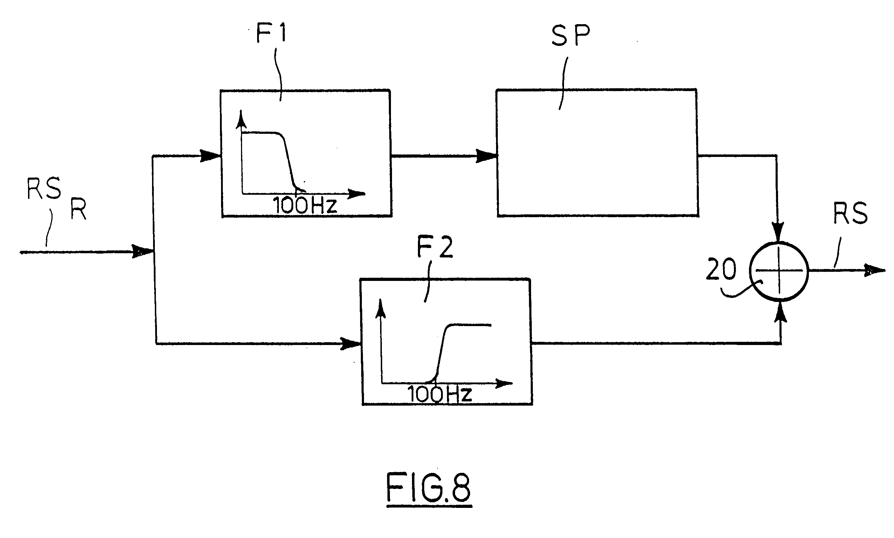

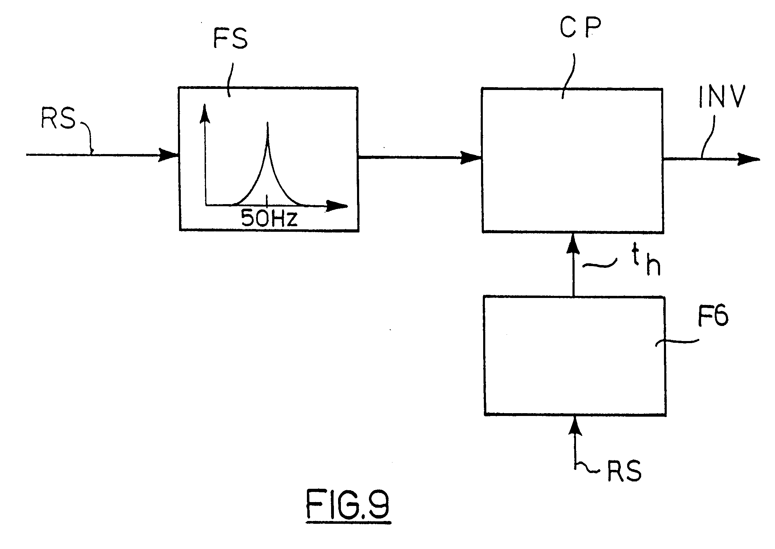

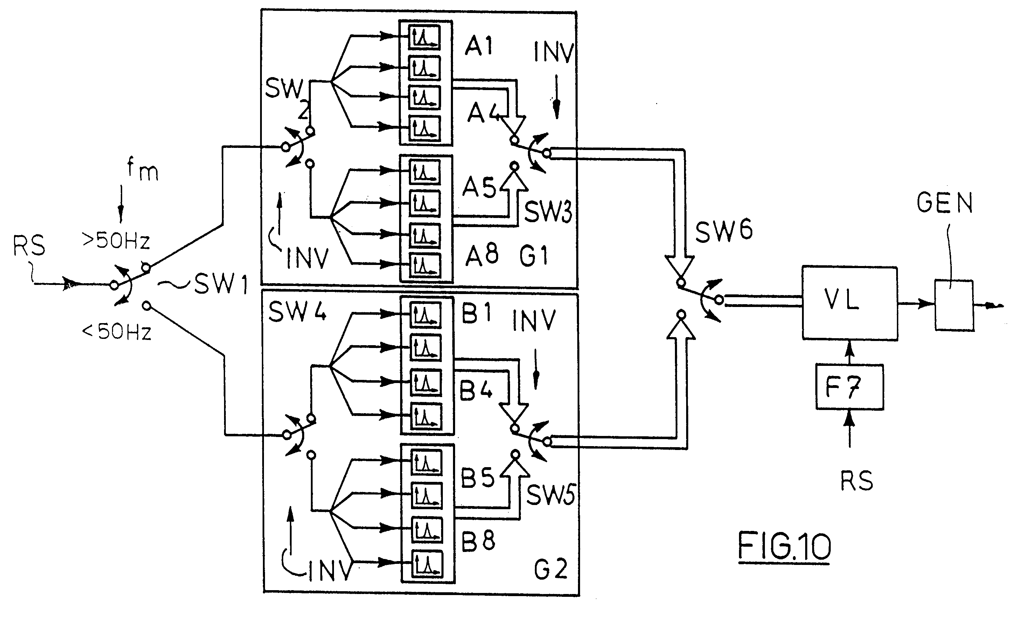

Mit dem erfindungsgemässen Verfahren soll festgestellt werden, welche der acht möglichen Grundlinien des Signals RS tatsächlich vorhanden ist.
Im Anschluss werden das erfindungsgemässe Verfahren und die erfindungsgemässe Vorrichtung insbesondere anhand der Figuren 8 bis 10 näher beschrieben.
Wie in Figur 8 dargestellt, wird am Anfang das empfangene Signal RSR über zwei Filter F1 und F2 vorgefiltert, die ein Tiefpass bzw. ein Hochpass mit Trennfrequenz bei 100 Hz sind, um den auf 50 Hz modulierten Teil von dem auf 178 Hz modulierten Teil zu trennen. Letzterer Teil, der von keiner Störung befallen ist, wird unmittelbar zum Ausgang (Addierknoten 20) zurückgeführt, während der auf 50 Hz modulierte Teil im Block SP verarbeitet wird, bevor er zum Ausgang zurückgeführt wird.
Der Aufbau des Blocks SP ist in Figur 10 näher dargestellt. Zur Erkennung der Hauptlinie des übertragenen Signals wird ein aus zwei Gruppen G1 und G2 bestehender Satz von Bandpassfiltern verwendet, die auf die in Tabelle 1 angegebenen Frequenzen ausgelegt sind.
Die Gruppe G1 umfasst einen Stand mit vier Filtern A1, A2, A3, A4, die jeweils auf die Frequenzen 47,75 Hz, 48,5 Hz, 49 Hz und 49,375 Hz ausgelegt sind, und einen Stand mit vier Filtern A5, A6, A7, A8, die jeweils auf die Frequenzen 45,5 Hz, 47 Hz, 48 Hz und 48,75 Hz ausgelegt sind.
Die Gruppe G2 umfasst einen Stand mit vier Filtern B1, B2, B3, B4, die jeweils auf die Frequenzen 50,625 Hz, 51 Hz, 51,5 Hz und 52,25 Hz ausgelegt sind, und einen Stand mit vier Filtern B5, B6, B7, B8, die jeweils auf die Frequenzen 51,25 Hz, 52 Hz, 53 Hz und 54,5 Hz ausgelegt sind.
Das (wie oben erwähnt auf 100 Hz gefilterte) Signal wird über den Umschalter SW1 zur Gruppe G1 geleitet, wenn die Motorfrequenz höher als 50 Hz ist, sonst wird es zur Gruppe G2 geleitet.
Der Umschalter SW1 ist durch ein Signal fm gesteuert, das die Motorfrequenz darstellt.
Genauer gesagt: ist die Frequenz des Motors und daher die Frequenz der durch den Motor erzeugten Störung höher als 50 Hz, so wird das Signal RS an der Filtergruppe G1 angelegt.
Sonst wird das Signal RS zur Filtergruppe G2 geleitet.
Die Störfrequenz fm wird aus einem dem Motor zugeführten Strom oder aus einem, diesen Strom darstellenden Signal ausgeschieden.
In der Gruppe G1 wird das Signal RS über den durch ein Signal INV gesteuerten Umschalter SW2 zu den vier Filtern A1-A4 geleitet, wenn eine Umkehrung ermittelt worden ist, oder es wird zu den vier Filtern A5-A8 geleitet, wenn keine Umkehrung ermittelt worden ist.
Das Ausgangssignal wird über den durch dasselbe Signal INV gesteuerten Umschalter SW3 entnommen. Praktisch stellen die Umschalter SW2 und SW3 einen doppelten Umschalter dar.
In der Gruppe G2 wird das Signal auf ähnliche Weise über den Umschalter SW4 zu den vier Filtern B1-B4 geleitet, wenn eine Umkehrung ermittelt worden ist, oder es wird zu den vier Filtern B5-B8 geleitet, wenn keine Umkehrung ermittelt worden ist. Das Signal wird dann an den entsprechenden Ausgängen durch den zugeordneten, stets vom Signal INV gesteuerten Umschalter SW5 entnommen.
Das Signal INV ist vorzugsweise ein digitales Signal, das die An- bzw. die Abwesenheit einer Umkehrung im modulierenden Signal angibt und zum Beispiel mit der in Figur 9 dargestellten Anordnung erhalten wird.
Es wurde bereits erwähnt, dass in Abwesenheit einer Umkehrung das Spektrum des modulierten Signals die 50-Hz-Linie enthält. Das Signal RS wird durch den Filter F5 geführt, der auf 50 Hz ausgelegt und ausreichend eng ist und der ausgefilterte Teil des aus F5 ausgehenden Signals RS wird einem Komparator CP zugeleitet, der die Sinusamplitude mit einem Anhaltswert tₕ vergleicht, der (in bekannter Art und Weise) über die Hüllkurve des durch Ausfiltern des Signals RS im Seitenband des Filters F6 erhaltenen Signals ermittelt wird; gegenüber der 50-Hz-Frequenz ist das ausgewählte Band das Band, das dem Band gegenüberliegt, in dem sich die Störung befindet. Liegt die Frequenz am Ausgang von F5 über die Schwelle, so ist der 50-Hz-Träger anwesend und das bedeutet, dass der 50-Hz-Träger durch ein Signal mit Umkehrung moduliert worden ist.
Am Ausgang des Komparators CP wird das digitale Signal INV aufgebaut, das die verschiedenen Umschalter steuert. Im Fall einer Umkehrung kann zum Beispiel das Signal INV den logischen Wert 1 annehmen.
Der Figur 10 ist ausserdem zu entnehmen, dass in Abhängigkeit von der Art des zugeleiteten Codes nur eine der beiden Filteruntergruppen auf eine signifikante Linie des Signals positioniert sein wird und einen ebenso signifikanten Ausgang haben wird.
Nach dem Filtersatz ist ein System VL vorgesehen, das den Filter ermittelt, der die grösste Sinusamplitude aufweist.
In vorteilhafter Weise ist dieser Block ähnlich wie derjenige zur Ermittlung der Umkehrunganwesenheit ausgeführt, und zwar mit einem Komparator und einer Schwelle s, die von dem im Filter F7 im Seitenband gefilterten Signal RS abgeleitet wird.
Beträgt der Wert der Störfrequenz mehr als 65 Hz oder weniger als 32,5 Hz, so ist die Dekodierung von der Störung unberührt geblieben und das Signal wird der Dekodiervorrichtung unverändert weitergeleitet.
Liegt der Wert der Störfrequenz zwischen 32,5 und 65 Hz, so hat das Signal RS eine Verzerrung erfahren und im Generator GEN wird mit Hilfe des korrekten Codes ein Signal RS vor Ort erzeugt. Mit einem anschliessenden Ausfiltern durch zwei weitere Filter, und zwar einen Tiefpass- bzw. einen Hochpassfilter mit Trennfrequenz bei 50 Hz, kann ein rauschfreies Signal erhalten werden, das zwar im Zeitbereich im wesentlichen unerkennbar ist, jedoch sämtliche Informationen über die Codefrequenzen enthält, die durch die Filter ausgeschieden werden.

Insbesondere wird das proportionale Verhältnis der Linienamplitude zur Amplitude des erhaltenen Signals genutzt. Nachdem die Frequenz der im Signal RS vorhandenen Grundlinie gefunden worden ist, ist der zugeleitete Code bekannt und die Vorrichtung wird anschliessend ein korrektes Signal RS erzeugen, sobald die Motorfrequenz wieder in den Bereich gelangt, in dem die Störung entsteht.

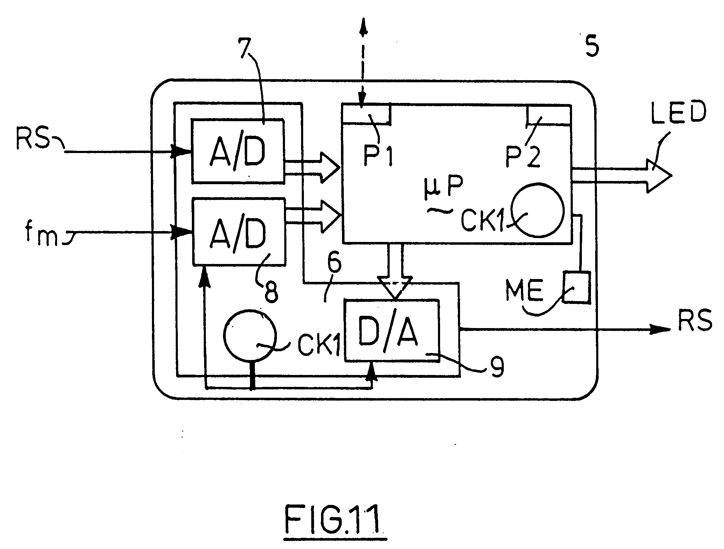

In einer bevorzugten Ausführungsform ist die erfindungsgemässe Vorrichtung 5 nach der in Figur 11 schematisch dargestellten Anordnung durch einen programmierten Mikroprozessor gestützt.
Der verwendete Mikroprozessor µP ist vorzugsweise ein DSP (Digital Signal Processor) Motorola 56002 zu 24 Bit, der mit einem inneren Taktgeber CK2 zu 40 MHz ausgerüstet ist.
Mit dem Mikroprozessor µP ist eine I/O-Ein- und Ausgabekarte 6 verbunden, die zwei A/D-Analog/Digital-Wandler 7 und 8, einen Digital/Analog-Wandler 9 und einen Taktgeber CK1 zu 1 kHz enthält. Ein Speicher ME enthält die Programme und die Initialisierungsdaten.
Das abgefangene analogische Signal RS, das die Störung enthält, und das von dem dem Motor zugeführten Strom abgeleitete Signal fm werden in den Wandlern 7 und 8 in Digitalform umgesetzt und am Mikroprozessor angelegt.
Ein das gefilterte Signal RS darstellender Ausgangswert des Mikroprozessors wird im Wandler 9 in Analogform umgesetzt und an der Dekodiervorrichtung 4 angelegt. Ein weiterer, am Ausgangsgatter P2 zur Verfügung stehender und Informationen über die Zustandsveränderlichen des Systems enthaltender Ausgang des Mikroprozessors wird unmittelbar in Digitalform an Sichtbarmachungs-LEDs angelegt. Es ist ausserdem ein Gatter P1 zur Verbindung mit den Schnittstellen eines Entwicklungssystem, zum Beispiel der Motorola-Vorrichtung ADS56002 zur Einstellung der Vorrichtung und für die anschliessenden Kontroll- und Auswertungsvorgänge vorgesehen.

## Patentansprüche

1. Verfahren zur Erkennung eines periodischen Signals, das wenigstens einen mit Rechteckwellen modulierten Sinusträger (f1) enthält, dessen Frequenz die Information darstellt, der ein sinusförmiges Störsignal mit einer innerhalb einer vorgegebenen Spanne zeitlich veränderlichen Frequenz überlagert ist, **gekennzeichnet** durch folgende Schritte:
a) Erkennung der Frequenz (fm) des Störsignals;
b) Ausfiltern des gestörten Signals, um das Halbspektrum zu ermitteln, in dem sich das Störsignal befindet;
c) Ausfiltern, um in Abhängigkeit von der Frequenz (fm) des Störsignals und der An- bzw. der Abwesenheit einer Umkehrung im modulierenden Signal die Hauptlinie zu ermitteln.

2. Verfahren, nach Patentanspruch 1, **dadurch gekennzeichnet**, dass eine Nachprüfung der An- bzw. der Abwesenheit einer Umkehrung im modulierenden Signal vorgesehen ist.

3. Vorrichtung zur Erkennung und zum Ausfiltern eines periodischen Signals (RS), das wenigstens einen mit Rechteckwellen modulierten Sinusträger (f1) enthält, dessen Frequenz die Information darstellt, der ein sinusförmiges Störsignal mit einer innerhalb einer vorgegebenen Spanne zeitlich veränderlichen Frequenz (fm) überlagert ist, mit wenigstens einem gegen das vom Signal (RS) erzeugte Magnetfeld empfindlichen Aufnehmer (2, 3) und mit einer Dekodierschaltung (4), die in der Lage ist, den im Signal (RS) enthaltenen Code auszuwerten, zur Durchführung des Verfahrens nach Patentanspruch 1, **dadurch gekennzeichnet** dass vorgesehen sind:
a) ein Satz bestehend aus zwei Bandpassfilter-Gruppen (G1 und G2), die jeweils aus zwei Ständern mit je vier parallelgeschalteten Filtern (A1, A2, A3, A4 und A5, A6, A7, A8; B1, B2, B3, B4 und B5, B6, B7, B8) gebildet sind;
b) erste Umschaltmittel (SW1), die durch ein die Frequenz der Störung darstellendes Signal (fm) gesteuert sind, um das periodische Signal (RS) zu der einen oder zur anderen Filtergruppe zu leiten, in Abhängigkeit davon, ob die Frequenz des Störsignals (fm) grösser oder kleiner als die Frequenz des modulierten Trägers (f1) ist;
c) zweite in einer Filtergruppe (G1) durch ein die An- bzw. die Abwesenheit einer Umkehrung im modulierenden Signal darstellendes Signal (INV) gesteuerte Umschaltmittel (SW2, SW3), um das periodische Signal (RS) durch den ersten Filterstand (A1, A2, A3, A4) bzw. durch den zweiten Filterstand (A5, A6, A7, A8) der ersten Gruppe (G1) zu führen;
d) dritte in der anderen Filtergruppe (G2) durch ein die An- bzw. die Abwesenheit einer Umkehrung im modulierenden Signal darstellendes Signal (INV) gesteuerte Umschaltmittel (SW4, SW5), um das periodische Signal (RS) durch den ersten Filterstand (B1, B2, B3, B4) bzw. durch den zweiten Filterstand (B5, B6, B7, B8) der zweiten Gruppe (G2) zu führen;
e) Vergleichermittel (VL), um den Filterausgang zu ermitteln, an dem die grösste Sinusamplitude anliegt.

4. Vorrichtung, nach Patentanspruch 3, **dadurch gekennzeichnet**, dass die Frequenz des modulierten Trägers (f1) vorzugsweise 50 Hz beträgt und dass die Frequenzen der Filter der einen Gruppe 47,75 Hz, 48,5 Hz, 49 Hz und 49,375 Hz bzw. 45,5 Hz, 47 Hz, 48 Hz und 48,75 Hz betragen, während die Frequenzen der Filter der anderen Gruppe 50,625 Hz, 51 Hz, 51,5 Hz und 52,25 Hz bzw. 51,25 Hz, 52 Hz, 53 Hz und 54,5 Hz betragen.

5. Vorrichtung, nach Patentanspruch 4, **dadurch gekennzeichnet**, dass der Ausgang der Vergleichsmittel (VL) mit einem Generator (GEN) verbunden ist, der mit Hilfe des korrekten Codes das periodische Signal (RS) vor Ort erzeugt, wenn der Wert des Störfrequenz zwischen 32,5 und 65 Hz liegt.

6. Vorrichtung, nach Patentanspruch 5, **dadurch** **gekennzeichnet**, dass eine Schaltung zur Erzeugung des Signals (INV) vorgesehen ist, das die An- bzw. die Abwesenheit einer Umkehrung im modulierenden Signal darstellt, das durch einen auf 50 Hz ausgelegten Filter (F5) aufgebaut wird, dessen Ausgang mit dem Eingang eines Komparators (CP) verbunden ist, der am anderen Eingang einen Anhaltswert (tₕ) empfängt, der über die Hüllkurve des erhaltenen Signals und durch Ausfiltern des periodischen Signals (RS) im Seitenband des Filters ermittelt wird.

7. Vorrichtung, nach Patentansprüche 3 bis 6, **dadurch gekennzeichnet**, dass ein programmierbarer Mikroprozessor (µP) vorgesehen ist, der mit einem inneren Taktgeber (CK2) ausgerüstet ist und mit einer I/O-Ein- und Ausgabekarte (6) sowie mit einem Speicher (ME) verbunden ist, der die Programme und die Initialisierungsdaten enthält.

8. Vorrichtung, nach Patentanspruch 7, **dadurch gekennzeichnet**, dass die Ein- und Ausgabekarte (6) zwei A/D-Wandler (7, 8), einen D/A-Wandler (9) und einen Taktgeber (CK1) für Stichprobenprüfungen enthält.

9. Vorrichtung, nach Patentanspruch 7, **dadurch gekennzeichnet**, dass der Mikroprozessor (µP) über ein Ausgangsgatter (P2) der Informationen über die Zustandsveränderlichen des Systems zur Sichtbarmachungs über LEDs verfügt.

10. Vorrichtung, nach Patentanspruch 7, **dadurch** **gekennzeichnet**, dass der Mikroprozessor (µP) über ein Gatter (P1) zur Verbindung mit den Schnittstellen eines äusseren Systems für Kontroll- und Auswertungsvorgänge verfügt.
